# EUROPÄISCHE PATENTSCHRIFT

(11) **EP 1 439 287 B1**
(45) Veröffentlichungstag und Bekanntmachung des Hinweises auf die Patenterteilung: **12.12.2012**
(21) Anmeldenummer: 03103648.6
(22) Anmeldetag: 02.10.2003
(51) Int. Cl.: F01N 3/20, F01N 11/00

(54) **Verfahren und Vorrichtung zum Betreiben eines Katalysators**
Method and device for controlling a catalyst
Méthode et dispositif pour le contrôle d'un catalyseur

(30) Priorität: 17.01.2003 DE 10301605
(43) Veröffentlichungstag der Anmeldung: 21.07.2004
(73) Patentinhaber: ROBERT BOSCH GMBH, 70442 Stuttgart (DE)
(72) Erfinder: Stein, Stefan, 70195, Stuttgart (DE)

(56) Entgegenhaltungen:
- EP-A- 1 149 991
- WO-A-00/76637
- WO-A-2005/005027
- DE-A1- 3 412 289
- DE-A1- 10 039 708
- DE-A1- 10 128 414
- DE-A1- 19 600 558

## Beschreibung

Die Erfindung betrifft ein Verfahren und eine Vorrichtung zum Betreiben eines Katalysators gemäß den Oberbegriffen der unabhängigen Ansprüche 1 und 8.

### Stand der Technik

Um Reaktionen, insbesondere Redoxreaktionen, von Fluiden zu beschleunigen, werden die Reaktionen in Gegenwart eines Katalysators durchgeführt. Hierdurch werden die Reaktionen katalysiert, und somit auch optimiert bzw. überhaupt erst möglich gemacht.

Beispielsweise sind Abgasanlagen von Brennkraftmaschinen, insbesondere von Kraftfahrzeugen, mit Katalysatoren ausgestattet, um die Emission von Schadstoffen beim Betrieb der Brennkraftmaschinen zu verringern. Hierdurch wird erreicht, daß beispielsweise im Abgas enthaltene Kohlenwasserstoffe und Kohlenmonoxid zu einem Großteil verbrannt oder oxidiert werden. Allerdings verbleibt hier noch ein großer Anteil von schädlichen Stickoxiden in den Abgasen und wird der Umgebung zugeführt.

Durch den Einsatz von Reduktionskatalysatoren kann auch der Anteil von Stickoxiden in insbesondere mageren Abgasen reduziert werden. Zum Betreiben dieser Katalysatoren sind die sogenannte selektive katalytische Reduktion ("selective catalytical reduction" - SCR) beispielsweise aus der US 2001/0053342 A1 und die NOₓ-Sorption und Reduktion (NSR) beispielsweise aus der WO 02/33231 A1 bekannt.

Bei einer selektiven katalytischen NOₓ-Reduktion werden den Abgasen kontinuierlich Reduktionsmittel, beispielsweise Ammoniak, Kohlenwasserstoffe (HC-SCR), Kohlenmonoxid o.dgl., zur Reduktion von Stickoxiden, unter anderem zu N₂, O₂, H₂O bzw. CO₂, zugemischt.

Die NOₓ-Sorption und Reduktion hingegen erfolgt diskontinuierlich. Hier werden die zu reduzierenden Stickoxide in einem Speicherkatalysator eingespeichert. In periodischen Intervallen wird dann Reduktionsmittel zugegeben, um den Speicherkatalysator zu regenerieren, wobei die Stickoxide hierbei reduziert werden.

Beide Verfahren sind beschränkt auf ein begrenztes Abgastemperaturintervall. Um dieses Temperaturintervall, auch Temperaturfenster genannt, bei unterschiedlichen Betriebs- bzw. Fahrsituationen, beispielsweise unterschiedlichen Motordrehzahlen, Kraftstoffeinspritzmengen o. dgl., zu erweitern, werden zur besseren Stickoxidreduktion Kombinationen unterschiedlicher Katalysatormaterialien eingesetzt.

Außerhalb dieses begrenzten Temperaturintervalls können sogenannte "Durchbrüche", das heißt unerwünschte Emissionen des Reduktionsmittels und/oder von Stickoxid auftreten, da die Reduktionsmitteldosierung hier nicht ausreichend an die jeweilige Betriebs- bzw. Fahrsituation, mit der insbesondere eine Veränderung der Abgastemperatur einhergeht, anpaßbar ist.

Aus der DE 101 28 414 A1 geht ein Verfahren zum Betreiben einer Brennkraftmaschine mit einem SCR-Katalysator hervor, bei der zwei Leitungen zur Zuführung von Ammoniak und Wasserstoff vorgesehen sind. Die beiden Reagenzien werden nicht als Mischung zugeführt und das Mengenverhältnis wird nicht verändert.

Aus der EP 1 149 991 A2 geht eine Steueeinrichtung einer Fördereinrichtung eines NOx-Reduktionsmittels hervor, bei dem jeweils Druckluft und ein Reduktionsmittel an einem Mischer zur Zuführung durch eine Düse in einen Motorabgasstrom stromoberhalb eines Katalysators abgegeben werden. Bei diesem Verfahren wird ein ungefähr konstanter, vorgegebener Referenzdruck an der Düse gehalten, es wird ein Mengenstrom-Sollwert an Reduktionsmittel berechnet in Reaktion auf Bedingunger des Motors und des Katalysators, und es erfolgt ein Steuern eines Mengenstroms an Reduktionsmittel zur Erzeugung eines gewünschten berechneten Reduktionsmittel-Mengenstrom-Sollwertes. Darauf wird ein Fehler eines Luftkompressors, der zur Erzeugung der Druckluft dient, oder der Düse bestimmt und es erfolgt ein Anhalten des Reduktionsstroms in Reaktion auf die Erfassung des wenigstens einen Fehlers.

Aus der DE 196 00 558 A1 geht ein Verfahren zur Verringerung von Stickoxiden in Abgasen von Dieselmotoren hervor, bei dem die im Abgas enthaltenen Stickoxide mithilfe eines geeigneten Reduktionsmittels an einem DNOx-Katalysator reduziert werden. Um eine verbesserte Umwandlungsrate für die Stickoxide zu erreichen, wird als Reduktionsmittel eine Kombination von Wasserstoffen und Kohlenwasserstoffen verwendet, wobei in unterschiedlichen Betriebsbereichen der Brennkraftmaschine ausschließlich Wasserstoff, ausschließlich Kohlenwasserstoffe oder Wasserstoffe und Kohlenwasserstoffe zugegeben werden. Die Menge an zugeführtem Wasserstoff bzw. Kohlenwasserstoff wird mit zunehmender Motorlast und/oder Katalysatortemperatur und/oder Motordrehzahl reduziert bzw. erhöht.

### Zusammenfassung der Erfindung

Der Erfindung liegt nun das technische Problem zugrunde, ein Verfahren zum Betreiben eines Katalysators, insbesondere eines SCR-Katalysators einer Brennkraftmaschine eines Kraftfahrzeuges, zur Katalyse einer Reaktion wenigstens eines Fluids, insbesondere zur Reinigung von Abgasen durch eine Reduktion von in den Abgasen enthaltenen Stickoxiden, und eine Vorrichtung zum Dosieren wenigstens eines Reagens anzugeben, bei denen der Einfluß der jeweiligen Betriebs- bzw. Fahrsituation, mit der insbesondere eine Veränderung der Temperatur des Fluids und des Katalysators einhergeht, auf den Wirkungsgrad des Katalysators so verringert wird, daß bei jeder Fluidtemperatur eine optimale Reaktion des Fluids, insbesondere Reduktion der Stickoxide, erreicht wird. Außerdem soll eine beispielsweise durch Alterung des Katalysators oder durch einen Austausch des Katalysators hervorgerufene Änderung des Wirkungsgrades des Katalysators kompensierbar sein.

Die Erfindung löst dieses Problem mit den Merkmalen der unabhängigen Ansprüche 1 und 8. Vorteilhafte Ausgestaltungen des Erfindungsgegenstandes sind den Unteransprüchen zu entnehmen.

Das erfindungsgemäße Verfahren sieht vor, daß das Mengenverhältnis der wenigstens zwei Reagenzien, insbesondere Reduktionsmittel,die abhängig von wenigstens einer Betriebskenngröße des Katalysators und/oder wenigstens einer Betriebskenngröße der Brennkraftmaschine dem Fluid zugemessen werden selbstadaptiv geregelt wird durch Anpassung der Regelung des Mengenverhältnisses an Veränderungen des Wirkungsgrades des wenigstens einen Katalysators durch folgende Schritte:
a) die Laufleistung des Kraftfahrzeuges und/oder Betriebsdaten, insbesondere die Betriebsdauer der Brennkraftmaschine(5), werden mit einem Algorithmus ermittelt und daraus die Alterung des wenigstens einen Katalysators (10; 12) bzw. die Abnahme des Wirkungsgrades des Katalysators*(1*0; 12) berechnet, und/oder
b) mit einem NOₓ-Sensor, insbesondere in Verbindung mit einem HC-Sensor, werdender Stickoxid-Anteil und/oder der Anteil an Kohlenwasserstoffen im Abgas bestimmt und daraus der Wirkungsgrad des wenigstens einen Katalysators(10; 12) berechnet,
c) ausgehend vom Wirkungsgrad des Katalysators wird anschließend das Mengenverhältnis geregelt.

Von Vorteil hierbei ist, dass eine Veränderung des Katalysator-Wirkungsrades beispielsweise aufgrund von Alterung oder nach einem Austausch des Katalysators hierdurch kompensiert werden kann. Die Regelung des Mengenverhältnisses passt sich dabei von selbst an Veränderungen des Wirkungsgrades des Katalysators an.

Von Vorteil ist hierbei auch daß unterschiedliche Reagenzien, die bei unterschiedlichen Fluidtemperaturen zu einer optimalen Reaktion, insbesondere Redoxreaktion, des Fluids führen, zudosiert werden, um die Reaktion des Fluids bei unterschiedlichen Fluidtemperaturen deutlich zu verbessern. Hierdurch wird ein Fluidtemperaturintervall, innerhalb dessen die optimale Reaktion des Fluids stattfindet, dynamisch verschoben bzw. erweitert.

Um bei der Dosierung eine homogene Verteilung der Reagenzien im Fluid zu erreichen, sieht eine vorteilhafte **Ausführungsform** vor, die Reagenzien zu mischen.

Bei einer weiteren vorteilhaften Ausführungsform wird das Mengenverhältnis der Reagenzien verändert, um bei der jeweiligen Fluidtemperatur eine optimale Zusammensetzung der Reagenzien zu erreichen.

Das Mengenverhältnis wird vorzugsweise abhängig von Betriebskenngrößen bestimmt, die ohnehin bei einem Betrieb des Katalysators insbesondere durch Messung ermittelt werden, so daß kein zusätzlicher technischer Aufwand erforderlich ist.

Vorzugsweise wird das Mengenverhältnis einem Kennfeld, insbesondere einem Motorkennfeld entnommen, wodurch das Mengenverhältnis schnell verfügbar ist, ohne daß eine vorherige Bearbeitung von Daten, insbesondere der Betriebskenngrößen, beispielsweise durch Berechnungen, erforderlich ist.

Die Reagenzien können rein prinzipiell auf unterschiedliche Weise zur Verfügung gestellt werden. So können die Reagenzien vorzugsweise aus wenigstens einem Behältnis zugeführt werden und/oder aus wenigstens einem Betriebsmittel, insbesondere einem Kraftstoff "onboard" aufbereitet werden. Die Zuführung aus dem wenigstens einen Behältnis hat den Vorteil, daß die Reagenzien abhängig von dem jeweiligen Verbrauch nachgefüllt werden können. Die Aufbereitung aus dem wenigstes einen ohnehin vorhandenen Betriebsmittel hat demgegenüber den Vorteil, daß auf ein Behältnis hier verzichtet werden kann, und daher auch eine Überprüfung eines Füllstandes entfallen kann.

Eine Kombination der Zuführung aus dem wenigstens einen Behältnis mit der Aufbereitung aus dem wenigstens einen Betriebsmittel hat den Vorteil, daß eine Grundversorgung mit Reagenzien durch die der durchschnittliche Verbrauch an Reagenzien gesichert ist, mit den aus dem wenigstens einen Betriebsmittel aufbereiteten Reagenzien erfolgen kann. Falls die Menge jedoch nicht ausreichen sollte, beispielsweise weil der Verbrauch kurzfristig zu hoch ist, können dem Fluid darüber hinaus Reagenzien aus dem wenigstens einen Behältnis zugeführt werden, wodurch eine große Dynamik bei der Dosierung erreicht wird, d.h. die Regelung der Mengen der Reagenzien innerhalb weiter Grenzen möglich ist. Außerdem verlängern sich die Auffüllintervalte für das wenigstens eine Behältnis. Da das wenigstens eine Behältnis ständig mit aufbereitetem Fluid befüllt wird, kann dieses darüber hinaus auch kleiner ausgebildet sein, wodurch der benötigte Einbauraum deutlich verkleinert wird.

Eine besonders vorteilhafte Ausgestaltung des Verfahrens sieht vor, wenigstens zwei unterschiedliche Mischungen der Reagenzien an wenigstens zwei unterschiedlichen Stellen dem Fluid zuzumessen. Die unterschiedlichen Reagenzmischungen werden hierzu in Fluidströmungsrichtung betrachtet vorzugsweise jeweils vor und hinter dem Katalysator zugemessen. Somit kann bei der Verwendung eines dem Katalysator nachgeschalteten zweiten Katalysators vor jedem Katalysator ein auf das jeweilige Katalysatormaterial eingestelltes Mengenverhältnis der Reagenzien zudosiert werden.

Die erfindungsgemäße Vorrichtung hat den Vorteil, daß sie mit geringem technischen Aufwand unter Verwendung von ohnehin vorhandenen Bauteilen, beispielsweise lediglich durch Austausch weniger Komponenten, die Dosierung von wenigstens zwei Reagenzien ermöglicht.

Mit der Steuereinheit ist, beispielsweise lediglich durch Programmierung, vorteilhafterweise das Mengenverhältnis der wenigstens zwei Reagenzien bestimmbar.

Dadurch, daß vorzugsweise wenigstens ein Behältnis für wenigstens ein Reagens mit der Dosiereinheit verbunden ist, und eine Mischeinheit zum Vermischen der wenigstens zwei Reagenzien vorgesehen ist, können die jeweiligen Mengen der beiden Reagenzien unabhängig voneinander vorgegeben und auch nachgefüllt werden. Die Mischeinheit ermöglicht eine optimale Vermischung der beiden Reagenzien, so daß eine möglichst homogene Mischung dem Fluid bzw. den Abgasen zuführbar ist, was zu einer Verbesserung der Reaktion des Fluids bzw. der Reinigung der Abgase, insbesondere der Reduktion von in den Abgasen enthaltenen Stickoxiden, führt.

Um auf das wenigstens eine Behältnis verzichten zu können, ist bei einer vorteilhaften Ausführungsform eine Aufbereitungseinheit zum Aufbereiten wenigstens eines Betriebsmittels, insbesondere eines Kraftstoffs, zu wenigstens einem der Reagenzien vorgesehen.

Mit der Steuereinheit kann vorteilhafterweise mit geringem Aufwand, insbesondere durch Programmierung, die Aufbereitungseinheit so gesteuert werden, daß die jeweiligen Mengen der Reagenzien schon während der Aufbereitung vorgegeben werden.

Um unterschiedliche Reagenzien getrennt aus dem wenigstens einen Betriebsmittel aufzubereiten, ist bei einer Ausführungsform für jedes der Reagenzien jeweils ein Behältnis als Zwischenspeicher mit der Aufbereitungseinheit fluidisch verbunden. Aus diesen Zwischenspeichern sind die Reagenzien der Dosiereinheit zuführbar und mit der Mischeinheit vermischbar. Durch den Einsatz der Zwischenspeicher können Reagenzien auch dann zugeführt werden, wenn zeitweise größere Reagensmengen benötigt werden als mit der Aufbereitungseinheit aus dem Betriebsmittel gewonnen werden können, wodurch eine große Dynamik bei der Dosierung erreicht wird.

Eine besonders vorteilhafte Ausführungsform sieht bei der Verwendung von zwei in Reihe geschalteten Katalysatoren, insbesondere aus unterschiedlichem Katalysatormaterial vor, eine erste Reagensmischung an einer ersten, in Fluidströmungsrichtung betrachtet vor dem ersten Katalysator angeordneten Dosierstelle zu dosieren, und eine zweite Reagensmischung an einer zweiten, in der Fluidleitung zwischen dem ersten und dem zweiten Katalysator angeordneten Dosierstelle zu dosieren. Dies hat den großen Vorteil, daß die Reagensmischung abhängig vom jeweiligen Katalysatormaterial des ersten bzw. zweiten Katalysator separat zudosierbar ist.

### Zeichnung

Weitere Vorteile und Merkmale der Erfindung sind Gegenstand der nachfolgenden Beschreibung sowie der zeichnerischen Darstellung bevorzugter Ausführungsbeispiele der Erfindung.

In der Zeichnung zeigen:
- Fig. 1: schematisch ein erstes Ausführungsbeispiel einer Vorrichtung zum Dosieren von zwei Reduktionsmitteln in eine Abgasleitung eines SCR-Katalysators mit zwei Reduktionsmittelbehältnissen, bei dem das von der Erfindung Gebrauch machende Verfahren zum Einsatz kommt,
- Fig. 2: schematisch ein zweites Ausführungsbeispiel einer Vorrichtung zum Dosieren von zwei Reduktionsmitteln in eine Abgasleitung, mit einer Aufbereitungseinheit zur Gewinnung von zwei Reduktionsmitteln aus einem Kraftstoff, bei dem das von der Erfindung Gebrauch machende Verfahren zum Einsatz kommt,
- Fig. 3: schematisch ein drittes Ausführungsbeispiel einer Vorrichtung zum Dosieren von zwei Reduktionsmitteln in eine Abgasleitung mit zwei Reduktionsmittelbehältnissen gemäß Fig. 1 und mit der Aufbereitungseinheit gemäß Fig. 2,
- Fig. 4: schematisch ein viertes Ausführungsbeispiel einer Vorrichtung zum Dosieren von zwei Reduktionsmitteln in eine Abgasleitung mit der Aufbereitungseinheit gemäß Fig. 2 und mit Zwischenspeichern für die beiden Reduktionsmittel, und
- Fig. 5: schematisch ein fünftes Ausführungsbeispiel einer Vorrichtung zum Dosieren von zwei unterschiedlichen Mischungen von Reduktionsmitteln an zwei Dosierstellen bei der Verwendung von zwei in Reihe geschalteten Katalysatoren.

### Beschreibung bevorzugter Ausführungsbeispiele

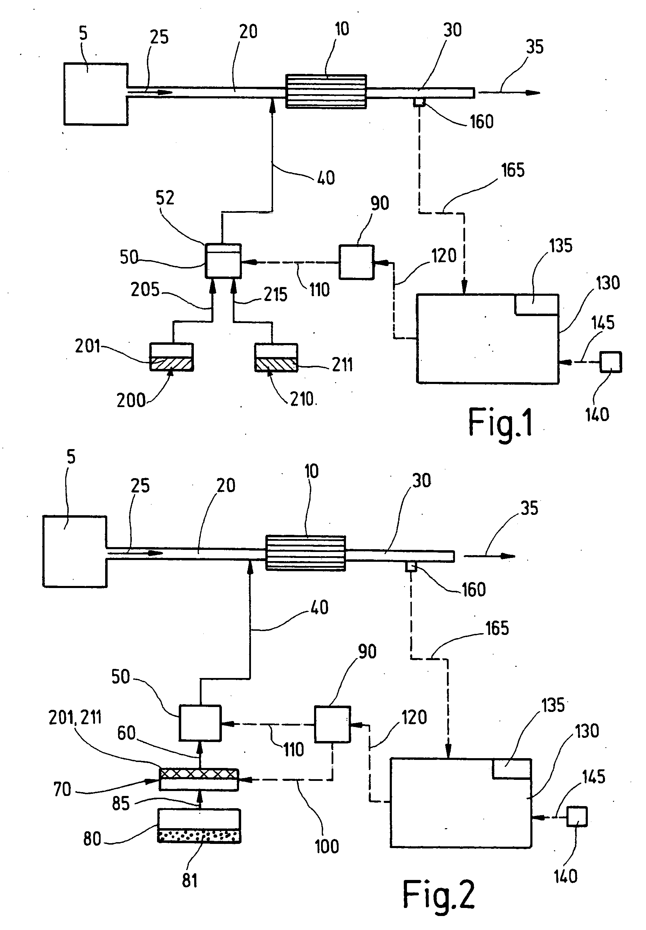

Das erfindungsgemäße Verfahren zum Betreiben eines Katalysators und eine Vorrichtung zum Dosieren von zwei Reduktionsmitteln 201 und 211 werden nachfolgend anhand einer in Fig. 1 dargestellten Dosiereinheit 50 für Reduktionsmittel eines SCR-Katalysators 10 einer Brennkraftmaschine 5 eines Kraftfahrzeugs insbesondere zur Reinigung von Abgasen durch selektive katalytische NOₓ-Reduktion ("selective catalytical reduction" SCR), d.h. durch Reduktion von Stickoxiden, erläutert. Es versteht sich jedoch, daß das Verfahren nicht auf den Einsatz bei SCR-Katalysatoren in Kraftfahrzeugen beschränkt ist. Vielmehr kann das Verfahren überall dort eingesetzt werden, wo eine Zusammensetzung der zwei Reduktionsmittel 201 und 211 oder auch von mehr als zwei Reduktionsmitteln, die abhängig von einer Betriebskenngröße einem flüssigen oder gasförmigen Fluid zugemessen werden, verändert werden soll. Auch sind das Verfahren und die Vorrichtung nicht beschränkt auf das Dosieren von Reduktionsmitteln zur Reduktion von Stickoxiden, vielmehr können auch andere flüssige oder gasförmige Reagenzien dosiert werden.

Der SCR-Katalysator 10 ist über eine Abgasleitung 20 mit der Brennkraftmaschine 5 verbunden. Bei einem Betrieb der Brennkraftmaschine 5 wird Abgas in Richtung eines Pfeils 25 dem SCR-Katalysator 10 zugeführt. Im SCR-Katalysator 10 wird das Abgas in an sich bekannter Weise gereinigt, und das gereinigte Abgas gelangt in Richtung eines Pfeils 35 (Abgasströmungsrichtung) über einen Abgasstrang 30 hinter dem Katalysator 10 in die Umgebung.

Über eine Reduktionsmittelzuleitung 40 wird eine Mischung der Reduktionsmittel 201 und 211 der Abgasleitung 20 zugefiihrt, um eine Reduktion der Stickoxide in an sich bekannter Weise zu erreichen. Das Vermischen der Reduktionsmittel 201, 211 erfolgt in einer Mischeinheit 52, die an der Dosiereinheit 50 angeordnet ist. Die Mischeinheit 52 kann auch Teil der Dosiereinheit 50 sein oder in anderer Weise mit dieser fluidisch verbunden sein.

Mit der Dosiereinheit 50 werden die jeweiligen Mengen der Reduktionsmittel 201 bzw. 211 aus Reduktionsmittelbehältnissen 200 bzw. 210 über jeweilige Reduktionsmittelzuleitungen 205 bzw. 215 der Mischeinheit 52 zudosiert.

Die Steuerung der Dosiereinheit 50 erfolgt über eine Steuerleitung 110 mit einer Steuereinheit 90. In der Steuereinheit 90 erfolgt beispielsweise eine Berechnung der für eine optimale Reduktion der Stickoxide jeweils benötigten Mengen der Reduktionsmittel 201 und 211.

Die Berechnung erfolgt auf der Basis von einen Abgaszustand und/oder einen Zustand der Brennkraftmaschine 5 beschreibenden Betriebskenngrößen, die beispielsweise an einer Schnittstelle 130 vorliegen und über eine Verbindung 120 an die Steuereinheit 90 übermittelt werden.

Der Schnittstelle 130 werden zum Beispiel Signale eines im Abgasstrang 30 in Abgasströmungsrichtung betrachtet hinter dem Katalysator 10 angeordneten Temperatursensors 160, mit dem die Temperatur des gereinigten Abgases erfaßt wird, über eine Signalleitung 165 übermittelt und weitere Betriebskenngrößen von Erfassungsmitteln 140 über eine weitere Signalleitung 145 zugeführt.

Weitere, den aktuellen Abgaszustand beschreibende, Betriebskenngrößen können beispielsweise die Abgastemperatur in Abgasströmungsrichtung betrachtet vor dem SCR-Katalysator 10, die NOₓ-Konzentration, die O₂-Konzentration und/oder die Abgasmenge sein. Den Zustand der Brennkraftmaschine 5 beschreibende Betriebskenngrößen können außerdem beispielsweise die Drehzahl, das Drehmoment oder die Abgaszusammensetzung sein.

Darüber hinaus ist ein Kennfeld 135, insbesondere ein Motorkennfeld vorgesehen, welches das Mengenverhältnis zwischen den Reduktionsmitteln 201 und 211 in Abhängigkeit von der Drehzahl, dem Drehmoment und/oder der Abgaszusammensetzung enthält, auf das zum Beispiel von der Schnittstelle 130 aus zugreifbar ist. Statt über die Schnittstelle 130 kann auf das Kennfeld 135 aber auch direkt von der Steuereinheit 90 zugegriffen werden (nicht gezeigt).

Die Bestimmung des Mengenverhältnisses bzw. der jeweiligen Mengen der Reduktionsmittel 201 und 211 kann mit der Steuereinheit 90 rein prinzipiell auf unterschiedliche Weise erfolgen.

Eine Möglichkeit besteht darin, das Mengenverhältnis bzw. die Menge der jeweiligen Reduktionsmittel 201 und 211 dem Kennfeld 135 zu entnehmen.

Das Mengenverhältnis kann beispielsweise auch aus den obengenannten, den aktuellen Abgaszustand beschreibenden, Betriebskenngrößen berechnet werden.

Außerdem kann vorgesehen sein, daß eine selbstadaptive Regelung des Mengenverhältnisses erfolgt, bei der alle, den Abgaszustand beschreibenden Betriebskenngrößen in Abgasströmungsrichtung betrachtet vor und hinter dem SCR-Katalysator 10 erfaßt werden und aus diesen Betriebskenngrößen das Mengenverhältnis und/oder die jeweiligen Mengen der Reduktionsmittel 201 und 211 berechnet werden, wobei sich die Regelung des Mengenverhältnisses selbst an den vorliegenden Zustand des SCR-Katalysators 10 bzw. der Brennkraftmaschine 5 anpaßt. Hierbei wird eine Dosierstrategie zum Beispiel in der Steuereinheit 90 hinterlegt, auf die bei einer Änderung des jeweiligen Zustands, beispielsweise einem Austausch des SCR-Katalysators 10 oder bei einer durch Alterung des SCR-Katalysator 10 hervorgerufenen Abnahme des Wirkungsgrades des SCR-Katalysators 10 zugegriffen wird, um eine optimale Dosierung zu erreichen.

Bei einem zweiten Ausführungsbeispiel, dargestellt in Fig. 2, sind diejenigen Elemente, die mit denen des ersten, in Fig. 1 beschriebenen Ausführungsbeispiel identisch sind, mit denselben Bezugszeichen versehen, so daß bezüglich deren Beschreibung auf die Ausführungen zum ersten Ausführungsbeispiel vollinhaltlich Bezug genommen wird. Dieses Ausführungsbeispiel unterscheidet sich von dem ersten dadurch, daß anstatt der Reduktionsmittelbehältnisse 200 und 210 eine Aufbereitungseinheit 70 vorgesehen ist, mit der aus einem Kraftstoff 81, welcher aus einem Kraftstofftank 80 über eine Kraftstoffzuleitung 85 der Aufbereitungseinheit 70 zugeführt wird, die Reduktionsmittel 201 und 211 gewonnen werden.

Die Reduktionsmittel 201 und 211 können hierbei in an sich bekannter Weise beispielsweise mit einem katalytischen Verfahren, insbesondere durch cracken, reformieren oder mit einer Fischer-Tropsch-Synthese, mit einem thermischen Verfahren, beispielsweise mit einer Destillation/Rektifikation/Reaktivrektifikation oder mit einem Membrantrennverfahren, mit Hilfe von Molekularsieben oder mit einem chromatographischen Verfahren aus dem Kraftstoff 81 gewonnen werden.

Mit der Steuereinheit 90 wird die Aufbereitungseinheit 70 über eine Steuerleitung 100 so angesteuert, daß abhängig von einem durch die jeweilige Betriebskenngröße charakterisierten Betriebszustand der Brennkraftmaschine 5 und/oder des SCR-Katalysators 10 die jeweils erforderlichen Mengen der Reduktionsmittel 201 und211 aus dem Kraftstoff 81 gewonnen werden und der Dosiereinheit 50 eine fertige Mischung zugeführt wird.

Die Mischeinheit 52 wird hier nicht benötigt, da die Mischung der Reduktionsmittel 201 und 211 bereits während des Aufbereitungsprozesses in der Aufbereitungseinheit 70 erfolgt.

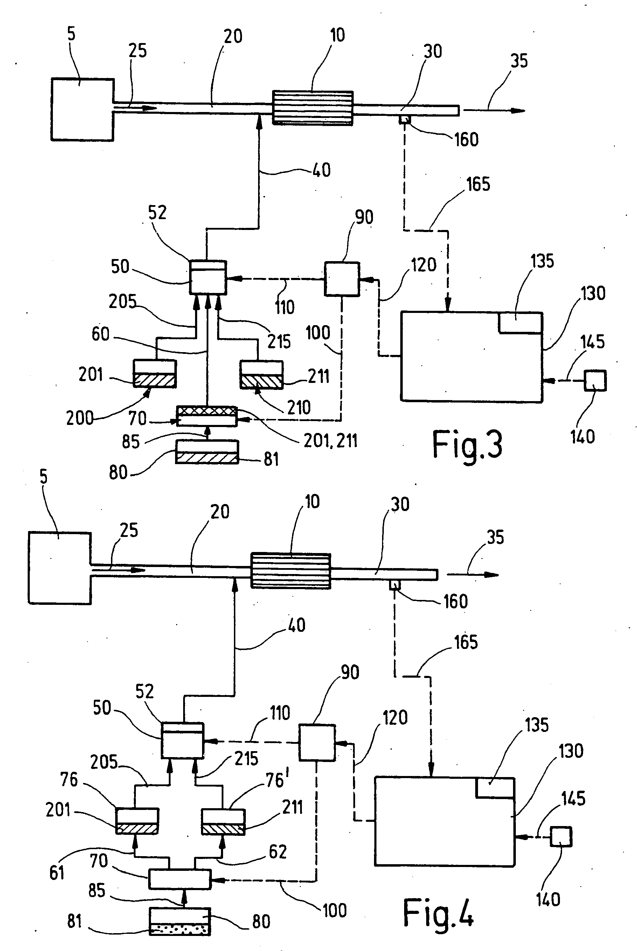

Bei einem dritten Ausführungsbeispiel, dargestellt in Fig. 3, sind diejenigen Elemente, die mit denen des ersten und/oder des zweiten, in Fig. 1 bzw. 2 beschriebenen Ausführungsbeispiel identisch sind, mit denselben Bezugszeichen versehen, so daß auch bezüglich deren Beschreibung auf die Ausführungen zum ersten bzw. zweiten Ausführungsbeispiel vollinhaltlich Bezug genommen wird.

Bei diesem Ausführungsbeispiel werden die Reduktionsmittel 201 und 211 sowohl, wie in Verbindung mit Fig. 1 beschrieben, entsprechend dem ersten Ausführungsbeispiel aus den Reduktionsmittelbehältnissen 200 bzw. 210 zugeführt, als auch über die in Verbindung mit Fig. 2 beschriebene Aufbereitungseinheit 70 aus dem Kraftstoff 81 gewonnen.

Beispielsweise kann hier eine jeweilige Menge an Reduktionsmitteln 201 und 211 aus dem Kraftstoff 81 gewonnen werden um einen Grundbedarf zu decken. Der Grundbedarf entspricht dem durchschnittlichen Verbrauch an Reduktionsmitteln 201 und 211. Lediglich wenn der Verbrauch zu groß ist, und die aufbereiteten Mengen nicht ausreichen, wird das jeweilige Reduktionsmittel 201 bzw. 211 aus dem Reduktionsmittelbehältnis 200 bzw. 210 zugeführt. Somit verlängern sich Überprüfungs- bzw. Auffüllintervalle für die Reduktionsmittel 210 und 211 deutlich.

Bei einem vierten Ausfuhrungsbeispiel, dargestellt in Fig. 4, sind diejenigen Elemente, die mit dem des zweiten, in Fig. 2 beschriebenen Ausführungsbeispiel identisch sind, mit denselben Bezugszeichen versehen, so daß bezüglich deren Beschreibung auf die Ausführungen zum zweiten Ausführungsbeispiel vollinhaltlich Bezug genommen wird.

Das vierte Ausführungsbeispiel unterscheidet sich vom zweiten dadurch, daß in der Aufbereitungseinheit 70 die Reduktionsmittel 201 bzw. 211 separat gewonnen werden, und jeweils einem Zwischenspeicher 76 bzw. 76', welcher über eine Zuleitung 61 bzw. 62 mit der Aufbereitungseinheit 70 verbunden ist, zugeführt werden.

Die Zwischenspeicher 76 und 76' sind entsprechend den in Verbindung mit Fig. 1 beschriebenen Reduktionsmittelbehältnissen 200 und 210 über die Reduktionsmittelzuleitung 205 bzw. 215 mit der Dosiereinheit 50 und der Mischeinheit 52 verbunden.

Dies hat den Vorteil, daß auch bei zeitweise großem Verbrauch immer ausreichende Mengen an Reduktionsmitteln 201 und 211 in den Zwischenspeichern 76 bzw. 76' vorhanden sind, um den Bedarf zu decken, selbst wenn mit der Aufbereitungseinheit 70 nicht genügend Reduktionsmittel 201 bzw. 211 gewonnen werden können. Hierdurch wird eine große Dynamik bei der Dosierung erreicht, d.h. die Mengen an Reduktionsmitteln 201 und 211 sind innerhalb weiter Grenzen, zum Beispiel mit einem Verhältnis eines unteren Grenzwertes zu einem oberen Grenzwert von 1:100, insbesondere von 1 ml/min bis 100 ml/min, variierbar. Außerdem können die Zwischenspeicher 76 und 76' kleiner ausgebildet sein als die in Verbindung mit Fig. 1 und 3 beschriebenen Reduktionsmittelbehältnisse 200 bzw. 210, da sie stetig mit aus dem Kraftstoff 81 aufbereiteten Reduktionsmitteln 201 bzw. 211 befüllt werden. Eine externe Befiillung mit Reduktionsmitteln 201 und 211 ist daher nicht nötig und somit kann auch auf eine Überprüfung des Füllstandes verzichtet werden.

Rein prinzipiell können die Reduktionsmittel 201 und 211 auch separat, ohne vorherige Vermischung der Abgasleitung 20 zugeführt werden. Es versteht sich, daß die Reduktionsmittelzuleitung 40 auch an einer anderen Stelle in der Abgasleitung 20 und/oder dem Abgasstrang 30 oder am SCR-Katalysator 10 selbst angeordnet sein kann.

Im übrigen können die Reduktionsmittel 201 und/oder 211 auch aus anderen verschiedenen Kraftstoffe 81 oder aus einer Kraftstoffmischung gewonnen werden. Statt des Kraftstoffes 81 bzw. der Kraftstoffmischung können aber auch ein oder mehrere andere Betriebsmittel hierfür vorgesehen sein.

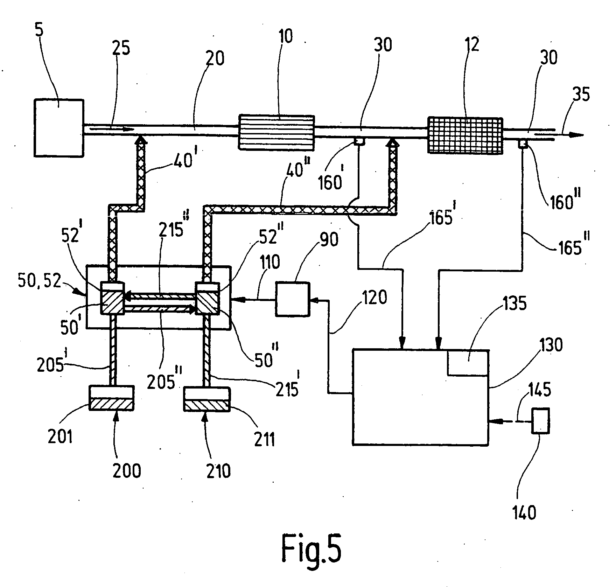

Bei einem fünften Ausführungsbeispiel, dargestellt in Fig. 5, sind diejenigen Elemente, die mit dem des ersten, in Fig. 1 beschriebenen Ausführungsbeispiel identisch sind, mit denselben Bezugszeichen versehen, so daß bezüglich deren Beschreibung auf die Ausführungen zum ersten Ausführungsbeispiel Bezug genommen wird.

Das fünfte Ausführungsbeispiel unterscheidet sich vom ersten dadurch, daß im Abgasstrang 30 ein weiterer Katalysator 12 in Abgasströmungsrichtung betrachtet hinter dem SCR-Katalysator 10 angeordnet ist, der aus einem anderen Katalysatormaterial als der SCR-Katalysator 10 besteht. Rein prinzipiell kann der weitere Katalysator 12 auch direkt an dem SCR-Katalysator 10 angeordnet sein und mit diesem eine Baueinheit bilden.

Darüber hinaus weist die Dosiereinheit 50 mit der Mischeinheit 52 eine erste Dosiereinrichtung 50' mit einer ersten Mischeinrichtung 52' und eine zweite Dosiereinrichtung 50" und mit einer zweiten Mischeinrichtung 52" mit einer ersten und einer zweiten Reduktionsmittelzuleitung 205' bzw. 215' und einer ersten und einer zweiten Reduktionsmittelquerleitung 205" bzw. 215" auf.

Der ersten Dosiereinrichtung 50' wird über die erste Reduktionsmittelzuleitung 205' das erste Reduktionsmittel 201 aus dem ersten Reduktionsmittelbehälter 200 zugeführt, darüber hinaus wird über die erste Reduktionsmittelquerleitung 215" über eine nicht gezeigte Verzweigung in der zweiten Dosiereinrichtung 50" aus dem zweiten Reduktionsmittelbehälter 210 das zweite Reduktionsmittel 211 der ersten Dosiereinrichtung 50' zugeführt. Mit der ersten Dosiereinrichtung 50' wird ein erstes Mengenverhältnis für eine erste Reduktionsmittelmischung bestimmt. In der ersten Mischeinrichtung 52' werden die beiden Reduktionsmittel 201 und 211 vermischt, und die erste Reduktionsmittelmischung wird über eine erste Reduktionsmittelzuführung 40' der Abgasleitung 20 in Abgasströmungsrichtung betrachtet vor dem SCR-Katalysator 10 zugeführt.

Der zweiten Dosiereinrichtung 50" wird aus dem zweiten Reduktionsmittelbehälter 210 das zweite Reduktionsmittel 211 über die zweite Reduktionsmittelzuleitung 215' zugeführt. Außerdem wird über die zweite Reduktionsmittelquerleitung 205" über eine nicht gezeigte Verzweigung in der ersten Dosiereinrichtung 50' das zweite Reduktionsmittel 201 aus dem ersten Reduktionsmittelbehälter 200 der zweiten Dosiereinrichtung 50" zugeführt. In der zweiten Mischeinrichtung 52" wird analog zur ersten Mischeinrichtung 52' eine zweite Reagensmischung realisiert, die über eine zweite Reduktionsmittelzuführung 40" in den Abgasstrang 30 zwischen dem SCR-Katalysator 10 und dem weiteren Katalysator 12 zugemessen wird.

Darüber hinaus ist ein erster Temperatursensor 160' analog dem Temperatursensor 160 in Fig. 1 im Abgasstrang 30 zwischen dem SCR-Katalysator 10 und dem weiteren Katalysator 12 angeordnet um die Temperatur des Abgases in Strömungsrichtung betrachtet hinter dem SCR-Katalysator 10 zu bestimmen. Über eine erste Signalleitung 165' wird die Temperatur des Abgases der Schnittstelle 130 übermittelt.

Im Abgasstrang 30 ist in Strömungsrichtung betrachtet hinter dem weiteren Katalysator 12 ein zweiter Temperatursensor 160" angeordnet. Über eine zweite Signalleitung 165" wird die Temperatur des Abgases hinter dem weiteren Katalysators 12 ebenfalls an die Schnittstelle 130 übermittelt.

Die Steuerung der beiden Dosiereinrichtungen 50' und 50" und der beiden Mischeinrichtungen 52' und 52" erfolgt mit der Steuereinheit 90, die mit der Steuerleitung 110 mit den Dosiereinrichtungen 50', 50" und den Mischeinrichtungen 52' und 52", in Fig. 5 schematisch angedeutet, verbunden ist.

Rein prinzipiell können die beiden Reduktionsmittel statt aus den Behältnissen 200 bzw. 210 auch über andere Zuleitungen, beispielsweise separate Aufbereitungseinheiten analog der in Verbindung mit Fig. 2, 3 bzw. 4 beschriebenen Aufbereitungseinheit verbunden sein. Die Reduktionsmittelzuleitungen 205" und 215" können statt wie gezeigt zwischen den Dosiereinrichtungen 50' und 50" angeordnet auch direkt mit den jeweiligen Reduktionsmittelbehältem 200 bzw. 210 verbunden sein.

Anstatt des SCR-Katalysators 10 in den in Fig. 1 bis 5 dargestellten Ausführungsbeispielen ist rein prinzipiell auch ein anderer Katalysator einsetzbar.

## Patentansprüche

1. Verfahren zum Betreiben wenigstens eines Katalysators (10; 12), insbesondere eines SCR-Katalysators (10), einer Brennkraftmaschine (5) eines Kraftfahrzeugs, zur Katalyse einer Reaktion wenigstens eines Fluids, wobei wenigstens zwei Reagenzien (201, 211) abhängig von wenigstens einer Betriebskenngröße des wenigstens einen Katalysators (10; 12) und/oder wenigstens einer Betriebskenngröße der Brennkraftmaschine (5) dem wenigstens einen Fluid zugemessen werden und wobei das Mengenverhältnis der wenigstens zwei Reagenzien (201, 211) abhängig von der wenigstens einen Betriebskenngröße des wenigstens einen Katalysators (10; 12) und/oder der wenigstens einen Betriebskenngröße der Brennkraftmaschine (5) verändert wird, **dadurch gekennzeichnet, daß** das Mengenverhältnis selbstadaptiv geregelt wird durch Anpassung der Regelung des Mengenverhältnisses an Veränderungen des Wirkungsgrades des wenigstens einen Katalysators (10) durch folgende Schritte:
a) die Laufleistung des Kraftfahrzeuges und/oder Betriebsdaten, insbesondere die Betriebsdauer der Brennkraftmaschine (5), werden mit einem Algorithmus ermittelt und daraus die Alterung des wenigstens einen Katalysators (10; 12) bzw. die Abnahme des Wirkungsgrades des Katalysators (10; 12) berechnet, und/oder
b) mit einem NOₓ-Sensor, insbesondere in Verbindung mit einem HC-Sensor, werden der Stickoxid-Anteil und/oder der Anteil an Kohlenwasserstoffen im Abgas bestimmt und daraus der Wirkungsgrad des wenigstens einen Katalysators (10; 12) berechnet,
c) ausgehend vom Wirkungsgrad des Katalysators wird anschließend das Mengenverhältnis geregelt.

2. Verfahren nach Anspruch 1, **dadurch gekennzeichnet, daß** eine Mischung der wenigstens zwei Reagenzien (201, 211) zugemessen wird.

3. Verfahren nach Anspruch 1, **dadurch gekennzeichnet, daß** das Mengenverhältnis abhängig von wenigstens einer der folgenden Betriebskenngrößen bestimmt wird:
a) der Temperatur des wenigstens einen Fluids in Abgasströmungsrichtung betrachtet hinter dem wenigstens einen Katalysator (10; 12),
b) der Temperatur des wenigstens einen Fluids in Abgasströmungsrichtung betrachtet vor dem wenigstens einen Katalysator (10; 12),
c) einer NOₓ-Konzentration im Fluid,
d) einer O₂-Konzentration im Fluid und/oder
e) der Menge des wenigstens einen Fluids.

4. Verfahren nach einem der Ansprüche 1 bis 3, **dadurch gekennzeichnet, daß** das Mengenverhältnis einem Kennfeld (135), insbesondere einem Motorkennfeld, entnommen wird.

5. Verfahren nach einem der Ansprüche 1 bis 4, **dadurch gekennzeichnet, daß** die Reagenzien (201, 211) aus wenigstens einem Behältnis (200, 210; 76, 76') zugeführt werden und/oder aus wenigstens einem Betriebsmittel, insbesondere einem Kraftstoff (81), aufbereitet werden.

6. Verfahren nach einem der Ansprüche 1 bis 5, **dadurch gekennzeichnet, daß** die Reagenzien (201, 211) dem Fluid an unterschiedlichen Orten einer Fluidleitung (20, 30) zugemessen werden.

7. Verfahren nach Anspruch 6, **dadurch gekennzeichnet, daß** an den unterschiedlichen Orten der Fluidleitung (20, 30) unterschiedliche Mischungen der Reagenzien (201, 211) zugemessen werden.

8. Vorrichtung zum Betreiben wenigstens eines Katalysators (10; 12), insbesondere eines SCR-Katalysators (10), einer Brennkraftmaschine (5) eines Kraftfahrzeugs, zur Katalyse einer Reaktion wenigstens eines Fluids mit wenigstens einer Reagenszuführung (205, 215, 60; 205', 215")und mit wenigstens einer Dosiereinheit (50) zum Dosieren wenigstens eines Reagens (201, 211) in eine Fluidleitung (20, 30), wobei wenigstens zwei Reagenzien (201, 211) abhängig von wenigstens einer Betriebskenngröße des wenigstens einen Katalysators (10; 12) und/oder wenigstens einer Betriebskenngröße der Brennkraftmaschine (5) dem wenigstens einen Fluid zumessbar ist und wobei das Mengenverhältnis der wenigstens zwei Reagenzien (201, 211) abhängig von der wenigstens einen Betriebskenngröße des wenigstens einen Katalysators (10; 12) und/oder der wenigstens einen Betriebskenngröße der Brennkraftmaschine veränderbar ist, **gekennzeichnet durch** eine speziell hergerichtete Steuereinheit (90), die sämtliche Schritte des Verfahrens nach einem der Ansprüche 1 bis 7 durchführt.

9. Vorrichtung nach Anspruch 8, **gekennzeichnet durch** wenigstens ein Behältnis (200, 210; 76, 76') für wenigstens eines der zwei Reagenzien (201, 211), das mit der wenigstens einen Dosiereinheit (50) fluidisch verbunden ist.

10. Vorrichtung nach einem der Ansprüche 8 oder 9, **gekennzeichnet durch** eine Mischeinheit (52) zum Vermischen der wenigstens zwei Reagenzien (201, 211).

11. Vorrichtung nach einem der Ansprüche 8 bis 10, **dadurch gekennzeichnet, daß** die Fluidleitung (20, 30) wenigstens zwei Dosierstellen zum Dosieren des wenigstens einen Reagens (201, 211) bzw. wenigstens einer Reagensmischung, in Fluidströmungsrichtung betrachtet insbesondere vor und hinter dem wenigstens einen Katalysator (10, 11), aufweist.

12. Vorrichtung nach einem der Ansprüche 8 bis 11, **gekennzeichnet durch** einen ersten Katalysator (10) und einen in der Fluidleitung (20, 30) in Reihe zu dem ersten Katalysator (10) geschalteten zweiten Katalysator (12), einer ersten Dosierstelle zum Dosieren eines ersten Reagens bzw. einer ersten Reagensmischung in die Fluidleitung (20) in Fluidströmungsrichtung betrachtet vor dem ersten Katalysator (10), und einer zweiten Dosierstelle zum Dosieren eines zweiten Reagens bzw. einer zweiten Reagensmischung in die Fluidleitung (30) in Fluidströmungsrichtung betrachtet vor dem zweiten Katalysator (12).

## Claims

1. Method for operating at least one catalytic converter (10; 12), in particular an SCR catalytic converter (10), of an internal combustion engine (5) of a motor vehicle, for the catalysis of a reaction of at least one fluid, wherein at least two reagents (201, 211) are metered into the at least one fluid as a function of at least one characteristic operating variable of the at least one catalytic converter (10; 12) and/or at least one characteristic operating variable of the internal combustion engine (5), and wherein the quantitative ratio of the at least two reagents (201, 211) is varied as a function of the at least one characteristic operating variable of the at least one catalytic converter (10; 12) and/or the at least one characteristic operating variable of the internal combustion engine (5), **characterized in that** the quantitative ratio is regulated in a self-adaptive manner by adaptation of the regulation of the quantitative ratio to variations in the efficiency of the at least one catalytic converter (10) by means of the following steps:
a) the distance travelled by the motor vehicle and/or operating data, in particular the operating duration of the internal combustion engine (5), are determined by means of an algorithm, and from these the aging of the at least one catalytic converter (10; 12) or the decrease in the efficiency of the catalytic converter (10; 12) is calculated, and/or
b) the nitrogen oxide fraction and/or the fraction of hydrocarbons in the exhaust gas is determined by means of a NOₓ sensor, in particular in conjunction with an HC sensor, and from these the efficiency of the at least one catalytic converter (10; 12) is calculated,
c) the quantitative ratio is subsequently regulated on the basis of the efficiency of the catalytic converter.

2. Method according to Claim 1, **characterized in that** a mixture of the at least two reagents (201, 211) is metered in.

3. Method according to Claim 1, **characterized in that** the quantitative ratio is determined as a function of at least one of the following characteristic operating variables:
a) the temperature of the at least one fluid downstream of the at least one catalytic converter (10; 12) as viewed in the exhaust-gas flow direction,
b) the temperature of the at least one fluid upstream of the at least one catalytic converter (10; 12) as viewed in the exhaust-gas flow direction,
c) a NOₓ concentration in the fluid,
d) an O₂ concentration in the fluid, and/or
e) the quantity of the at least one fluid.

4. Method according to one of Claims 1 to 3, **characterized in that** the quantitative ratio is extracted from a characteristic map (135), in particular an engine characteristic map.

5. Method according to one of Claims 1 to 4, **characterized in that** the reagents (201, 211) are supplied from at least one vessel (200, 210; 76, 76') and/or are prepared from at least one operating medium, in particular a fuel (81).

6. Method according to one of Claims 1 to 5, **characterized in that** the reagents (201, 211) are metered into the fluid at different locations in a fluid line (20, 30).

7. Method according to Claim 6, **characterized in that** different mixtures of the reagents (201, 211) are metered in at the different locations in the fluid line (20, 30).

8. Device for operating at least one catalytic converter (10; 12), in particular an SCR catalytic converter (10), of an internal combustion engine (5) of a motor vehicle, for the catalysis of a reaction of at least one fluid, having at least one reagent supply (205, 215, 60; 205', 215'') and having at least one dosing unit (50) for dosing at least one reagent (201, 211) into a fluid line (20, 30), wherein at least two reagents (201, 211) can be metered into the at least one fluid as a function of at least one characteristic operating variable of the at least one catalytic converter (10; 12) and/or as a function of at least one characteristic operating variable of the internal combustion engine (5), and wherein the quantitative ratio of the at least two reagents (201, 211) can be varied as a function of the at least one characteristic operating variable of the at least one catalytic converter (10; 12) and/or as a function of the at least one characteristic operating variable of the internal combustion engine, **characterized by** a specially set-up control unit (90) which carries out all of the steps of the method according to one of Claims 1 to 7.

9. Device according to Claim 8, **characterized by** at least one vessel (200, 210; 76, 76') for at least one of the two reagents (201, 211), which vessel is fluidically connected to the at least one dosing unit (50).

10. Device according to either of Claims 8 and 9, **characterized by** a mixing unit (52) for mixing the at least two reagents (201, 211).

11. Device according to one of Claims 8 to 10, **characterized in that** the fluid line (20, 30) has at least two dosing locations for the dosing of the at least one reagent (201, 211) or at least one reagent mixture, in particular upstream and downstream of the at least one catalytic converter (10, 11) as viewed in the fluid flow direction.

12. Device according to one of Claims 8 to 11, **characterized by** a first catalytic converter (10) and a second catalytic converter (12) which is positioned in the fluid line (20, 30) in series with the first catalytic converter (10), a first dosing location for the dosing of a first reagent or a first reagent mixture into the fluid line (20) upstream of the first catalytic converter (10) as viewed in the fluid flow direction, and a second dosing location for the dosing of a second reagent or a second reagent mixture into the fluid line (30) upstream of the second catalytic converter (12) as viewed in the fluid flow direction.

## Revendications

1. Procédé de conduite d'au moins un catalyseur (10; 12), notamment d'un catalyseur SCR (10) d'un moteur (5) à combustion interne de véhicule automobile, en vue de la catalyse d'une réaction d'au moins un fluide,
au moins deux réactifs (201, 211) étant ajoutés de manière contrôlée au fluide ou aux fluides en fonction d'au moins une grandeur caractéristique de fonctionnement du ou des catalyseurs (10; 12) et/ou d'au moins une grandeur caractéristique de fonctionnement du moteur (5) à combustion interne, les proportions des deux ou plusieurs réactifs (201, 211) étant modifiées en fonction de la ou des grandeurs caractéristiques de fonctionnement du ou des catalyseurs (10; 12) et/ou de la ou des grandeurs caractéristiques de fonctionnement du moteur (5) à combustion interne,
**caractérisé en ce que**
les proportions sont régulées de manière auto-adaptative par adaptation de la régulation des proportions à des modifications du rendement du ou des catalyseurs (10) en appliquant les étapes suivantes :
a) la marche du véhicule automobile et/ou des données de fonctionnement et notamment la durée de fonctionnement du moteur (5) à combustion interne sont déterminées à l'aide d'un algorithme et le vieillissement du ou des catalyseurs (10; 12) ou la diminution du rendement du catalyseur (10; 12) sont calculés à partir de là, et/ou
b) la teneur en oxydes d'azote et/ou la teneur en hydrocarbures dans les gaz d'échappement sont déterminées à l'aide d'une sonde à NOₓ, notamment en liaison avec une sonde HC, pour calculer le rendement du ou des catalyseurs (10; 12) à partir de là et
c) partant du rendement du catalyseur, les proportions sont ensuite régulées.

2. Procédé selon la revendication 1, **caractérisé en ce qu'**on y ajoute un mélange des deux ou plusieurs réactifs (201, 211).

3. Procédé selon la revendication 1, **caractérisé en ce que** les proportions sont déterminées en fonction d'au moins l'une des grandeurs caractéristiques de fonctionnement suivantes :
a) la température du ou des fluides en aval du ou des catalyseurs (10; 12) dans la direction d'écoulement des gaz d'échappement,
b) la température du ou des fluides en amont du ou des catalyseurs (10; 12) dans la direction d'écoulement des gaz d'échappement,
c) la concentration en NOₓ dans le fluide,
d) la concentration en O₂ dans le fluide et/ou
e) le débit du ou des fluides.

4. Procédé selon l'une des revendications 1 à 3, **caractérisé en ce que** les proportions sont reprises dans un champ de caractéristiques (135), notamment un champ de caractéristiques du moteur.

5. Procédé selon l'une des revendications 1 à 4, **caractérisé en ce que** les réactifs (201, 211) sont apportés en provenance d'au moins un récipient (200, 210; 76, 76') et/ou sont préparés à partir d'au moins un agent de fonctionnement et notamment un carburant (81).

6. Procédé selon l'une des revendications 1 à 5, **caractérisé en ce que** les réactifs (201, 211) sont ajoutés au fluide en différents emplacements d'un conduit (20, 30) de fluide.

7. Procédé selon la revendication 6, **caractérisé en ce que** différents mélanges des réactifs (201, 211) sont ajoutés aux différents emplacements du conduit (20, 30) de fluide.

8. Dispositif de conduite d'au moins un catalyseur (10; 12), notamment d'un catalyseur SCR (10), du moteur (5) à combustion interne d'un véhicule automobile, en vue de la catalyse d'une réaction d'au moins un fluide, le dispositif présentant au moins une amenée (205, 215, 60; 205', 215") de réactifs et au moins une unité de dosage (50) qui dose au moins un réactif (201, 211) dans un conduit (20, 30) de fluide, au moins deux réactifs (201, 211) pouvant être ajoutés au fluide ou aux fluides en fonction d'au moins une grandeur caractéristique de fonctionnement du ou des catalyseurs (10; 12) et/ou d'au moins une grandeur caractéristique de fonctionnement du moteur (5) à combustion interne, les proportions des deux ou plusieurs réactifs (201, 211) pouvant être modifiées en fonction de la ou des grandeurs caractéristiques de fonctionnement du ou des catalyseurs (10; 12) et/ou de la ou des grandeurs caractéristiques de fonctionnement du moteur à combustion interne,
**caractérisé par**
une unité de commande (90) conçue spécialement et qui exécute la totalité des étapes du procédé selon l'une des revendications 1 à 7.

9. Dispositif selon la revendication 8, **caractérisé par** au moins un récipient (200, 210; 76, 76') prévu pour au moins l'un des deux réactifs (201, 211) et relié à écoulement à la ou aux unités de dosage (50).

10. Dispositif selon l'une des revendications 8 ou 9, **caractérisé par** une unité de mélange (52) qui mélange les deux ou plusieurs réactifs (201, 211).

11. Dispositif selon l'une des revendications 8 à 10, **caractérisé en ce que** le conduit (20, 30) de fluide présente notamment en amont et en aval du ou des catalyseurs (10, 11) dans la direction d'écoulement de fluide au moins deux emplacements de dosage qui permettent de doser le ou les réactifs (201, 211) ou le ou les mélanges de réactifs.

12. Dispositif selon l'une des revendications 8 à 11, **caractérisé par** un premier catalyseur (10) et un deuxième catalyseur (12) raccordé en série au premier catalyseur (10) dans le conduit (20, 30) de fluide, un premier emplacement de dosage qui permet de doser un premier réactif ou un premier mélange de réactif dans le conduit (20) de fluide en amont du premier catalyseur (10) dans la direction d'écoulement du fluide et un deuxième emplacement de dosage qui permet de doser un deuxième réactif ou un deuxième mélange de réactif dans le conduit (30) de fluide en amont du deuxième catalyseur (12) dans la direction d'écoulement du fluide.
